Europäisches Patentamt

European Patent Office

Office européen des brevets

(11) Numéro de publication: **0 215 715 B1**

# FASCICULE DE BREVET EUROPEEN

(45) Date de publication de fascicule du brevet:
**03.07.91**

(51) Int. Cl.⁵: **E04B 9/28**, B44C 7/02,
F16L 5/02

(21) Numéro de dépôt: **86401997.1**

(22) Date de dépôt: **12.09.86**

(54) **Faux plafond ou faux mur constitué par une nappe tendue.**

(30) Priorité: **13.09.85 FR 8513620**

(43) Date de publication de la demande:
**25.03.87 Bulletin 87/13**

(45) Mention de la délivrance du brevet:
**03.07.91 Bulletin 91/27**

(84) Etats contractants désignés:
**AT BE CH DE GB IT LI NL SE**

(56) Documents cités:
**CH-A- 647 852**
**FR-A- 1 120 707**
**GB-A- 1 030 499**
**US-A- 4 500 580**

**PLASTICA, vol. 21, no. 11, novembre 1968,
pages 542,543, B.V. Uitgeversmaatschappij
REFLEX, Rotterdam, NL; C.A. VISSER:
"Nieuwe plafondafwerking door middel van
een spanfolie"**

(73) Titulaire: **Scherrer, Fernand
2, rue Georges Bizet
F-68170 Rixheim(FR)**

(72) Inventeur: **Scherrer, Fernand
2, rue Georges Bizet
F-68170 Rixheim(FR)**

(74) Mandataire: **Bruder, Michel
10 rue de la Pépinière
F-75008 Paris(FR)**

## Description

La présente invention concerne un faux plafond ou faux mur constitué par une nappe tendue accrochée, le long de ses bords, à un support fixé au mur ou au plafond.

On connaît déjà des faux plafonds qui comprennent, d'une part, un cadre horizontal fixé à la partie supérieure des murs d'un local, ce cadre étant formé par une lisse extérieur constituée elle-même de profilés aboutés, et, d'autre part, une nappe tendue horizontalement à l'intérieur de ce cadre, cette nappe étant constituée par une feuille de matière plastique ou une toile. La nappe est maintenue tendue du fait de l'accrochage, sur la lisse, d'une bordure solidaire de la nappe, formant en quelque sorte un "harpon", cette bordure présentant en section droite la forme d'un crochet venant s'agripper sur un épaulement de la lisse.

Un tel faux plafond est décrit, par exemple, dans la revue PLASTICA, vol. 21, no 11, novembre 1968, pages 542-543, B.V. Uitgeversmaatschappij REFLEX, Rotterdam, NL; C.A. VISSER: "Nieuwe plafondafwerking door middel von een spanfolie".

Si un tel faux plafond s'est révélé, à l'usage, relativement facile à mettre en place, il a toutefois posé certains problèmes aux endroits où, dans une pièce où le faux plafond est mis en place, se trouvent des canalisations de descente d'eau, des tuyaux de chauffage central, des gaines électrique etc.., ces éléments étant placés contre le mur ou à quelque centimètres de celui-ci. Diverses techniques ont été envisagées pour permettre à la toile de contourner ces éléments en saillie par rapport au mur mais ces techniques ne sont pas révélées satisfaisantes car elles entraînent en général une complication du procédé de montage de la toile.

On connaît par ailleurs divers dispositifs d'étanchéité autour de canalisations. Ainsi le brevet US-A-4 500 580 a trait à une rondelle d'étanchéité qui est pourvue de lignes de moindre résistance circulaires de manière à ménager dans sa partie centrale une ouverture correspondant sensiblement au diamètre d'une canalisation passant à travers elle. Le brevet FR-A-1 120 707 est relatif à un dispositif d'étanchéité pour des tubes traversant une paroi présentant une ouverture relativement grande. Le dispositif comprend deux demi-coquilles se rejoignant suivant une ligne de raccordement et ces demi-coquilles sont maintenues serrées sur la paroi au moyen d'un couvercle ou d'une cuvette. Le brevet CH-A- 647 852 décrit une manchette d'étanchéité de forme annulaire associée à une feuille d'étanchéité carrée qui est collée à une nappe d'étanchéité interposée entre une couche de ciment et une dalle en béton.

La présente invention vise à procurer un faux plafond ou faux mur de conception particulièrement simple et permettant un passage aisé des éléments en saillie tels que canalisations diverses.

A cet effet ce faux plafond ou faux mur constitué par une nappe tendue, accrochée, le long de ses bords, à un support fixé au mur ou au plafond, le support étant constitué par une lisse horizontale s'étendant tout autour de la pièce et qui est formée de tronçons de profilés présentant un épaulement sur lequel vient s'accrocher une bordure de la nappe, en forme de crochet ou harpon, est caractérisé en ce que la nappe présente, à chaque endroit où se trouve des canalisations la traversant, à proximité de ses côtés, une plaque de renfort, collée sur la nappe avec un côté longitudinal de ladite plaque appuyant sur la bordure et préalablement découpée, tout comme la nappe, les découpes de la plaque et celles de la nappe sont superposées et épousent la forme de chaque canalisation qui traverse lesdites nappe et plaque, et les découpes de la plaque débouchent dans le côté longitudinal qui prend appui sur la bordure, cette bordure étant interrompue aux endroits où débouchent lesdites découpes de la plaque et celles de la nappe confinant ainsi auxdits endroits à l'épaulement. le plafond ou le mur, cette plaque de renfort présentant une découpe permettant le passage de l'élément en saillie à travers elle et à travers la nappe.

On décrira ci-après, à titre d'exemples non limitatifs, diverses formes d'exécution de la présente invention, en référence au dessin annexé sur lequel :

La figure 1 est une vue en perspective, de dessus, d'une nappe tendue et accrochée sur une lisse, à l'endroit du passage de deux canalisations verticales.

La figure 2 est une vue en coupe verticale faite suivant la ligne II-II de la figure 1.

La figure 3 est une vue en perspective illustrant l'utilisation d'une plaque de renfort pour le passage de canalisations se trouvant dans un angle d'une pièce.

La figure 4 est une vue en perspective d'une variante d'exécution de l'invention.

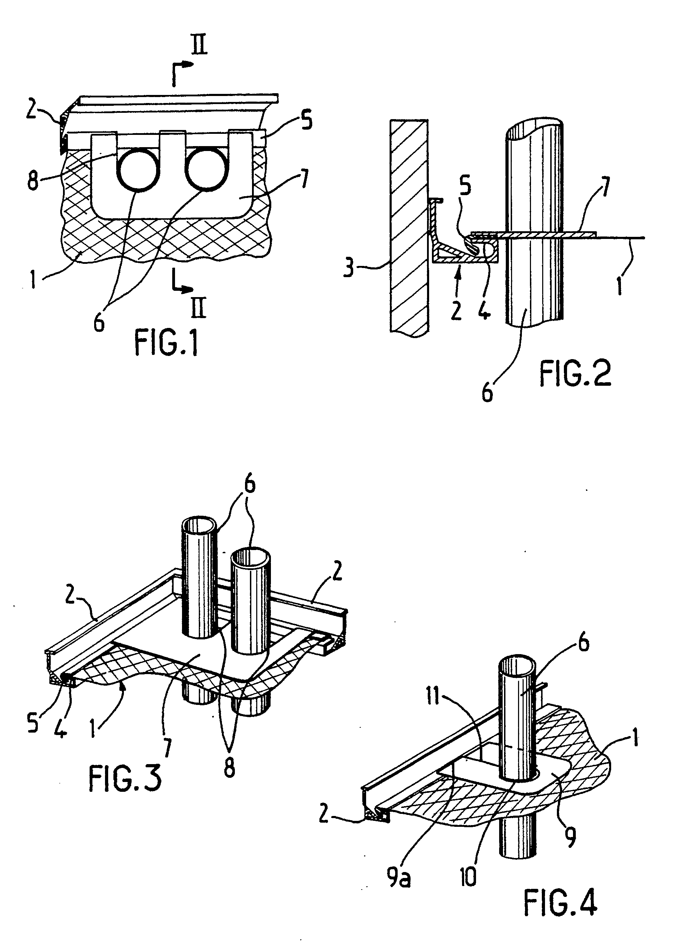

Les figures 1 et 2 illustrent une forme d'exécution d'un faux plafond constitué par une nappe 1, constituée par une toile ou une feuille de matière plastique, laquelle est tendue et accrochée, le long de ses bords, à un support 2 fixé à la partie supérieure d'un mur 3. Le support 2 est constitué par une lisse horizontale s'étendant tout autour de la pièce et qui est formée de tronçons de profilés aboutés. Chaque profilé a une section droite sensiblement en L et il présente, sur son aile horizontale, un épaulement 4 sur lequel vient s'accrocher une bordure 5 de la toile 1, en forme de crochet ou harpon.

Suivant l'invention la nappe tendue 1 présente, à chaque endroit où se trouvent des canalisations verticales 6 situées à une certaine distance du mur, une plaque de renfort 7 qui est collée sur la face supérieure de la nappe 1. Cette plaque de renfort qui peut être par exemple une plaque de chlorure de polyvinyle translucide de 2mm d'épaisseur, est préalablement découpée de manière à pouvoir épouser la forme de la ou des canalisations 6 qui doivent traverser la nappe 1. Dans l'exemple illustré sur la figure 1 la plaque de renfort 7 qui a une forme générale rectangulaire, présente deux découpes parallèles 8 en forme de U qui débouchent toutes les deux dans un même côté longitudinal de la plaque 7. Dans ces deux découpes 8 viennent s'engager les deux canalisations verticales 6. La plaque de renfort 7 maintient ainsi parfaitement la nappe 1 dans sa zone proche des canalisations verticales 6. Naturellement les parties de la bordure 5 en forme de harpon qui se trouvent sous les orifices d'entrée des découpes 8, sont supprimées, et de même les parties de la nappe 1 qui correspondent au reste de la surface des découpes 8 sont également enlevées afin de permettre d'engager librement la plaque de renfort 7 qui est collée à la nappe 1 sous-jacente, entre les deux canalisations 6 et de part et d'autre de celles-ci.

la figure 3 illustre l'utilisation d'une plaque de renfort 7 située dans un angle de la pièce où le faux plafond est monté et se trouvent deux canalisations verticales 6. Là encore la plaque de renfort 7 est découpée de manière à présenter, en regard des deux canalisations 6, les deux découpes 8 en forme de U.

Dans la variante d'exécution de l'invention représentée sur la figure 4 la nappe tendue 1 porte une plaque de renfort 9 de forme rectangulaire, qui est percée d'un trou 10 traversé par une canalisation verticale 6, ce trou 10 communiquant avec le bord 9a de la plaque 9 qui est situé du côté de la lisse 2, par l'intermédiaire d'une fente 11 à lèvres jointives. Naturellement la nappe sous-jacente 1 est également fendue en-dessous de la fente 11, pour permettre d'engager la nappe 1 et la plaque de renfort 9 qui lui est collée, autour de la canalisation 6, en ouvrant, pour cette introduction, au maximum la fente 11 et la fente correspondante de la nappe 1.

## Revendications

1. Faux plafond ou faux mur constitué par une nappe tendue (1), accrochée, le long de ses bords, à un support fixé au mur ou au plafond, le support (2) étant constitué par une lisse horizontale s'étendant tout autour de la pièce et qui est formée de tronçons de profilés présentant un épaulement (4) sur lequel vient s'accrocher une bordure (5) de la nappe (1), en forme de crochet ou harpon, caractérisé en ce que la nappe (1) présente, à chaque endroit où se trouvent des canalisations (6) la traversant, à proximité de ses côtés, une plaque de renfort (7), collée sur la nappe (l) avec un côté longitudinal de ladite plaque (7) appuyant sur la bordure (5) et préalablement découpée, tout comme la nappe (1), les découpes (8) de la plaque (7) et celles de la nappe (1) sont superposées et épousent la forme de chaque canalisation (6) qui traverse lesdites nappe (1) et plaque (7), et les découpes (8) de la plaque (7) débouchent dans le côté longitudinal qui prend appui sur la bordure (5), cette bordure étant interrompue aux endroits où débouchent lesdites découpes (8) de la plaque (7) et celles de la nappe (1) confinant ainsi auxdits endroits à l'épaulement (4).

2. Faux plafond ou faux mur suivant la revendication 1 caractérisé en ce que chaque découpe (8) a la forme d'un U.

3. Faux plafond ou faux mur suivant la revendication 2 caractérisé en ce que la plaque de renfort (7) comprend deux découpes parallèles.

4. Faux plafond ou faux mur suivant la revendication 1 caractérisé en ce que chaque découpe dans la nappe (1) et la plaque de renfort (9) a la forme générale d'un trou (10) qui communique avec le bord (9a) de la plaque de renfort (9) qui est situé du côté de la lisse (2), par l'intermédiaire d'une fente (11) à lèvres jointives.

## Claims

1. False ceiling or false wall constituted by a stretched sheet 1 fastened, along its edges, to a support fixed to the wall or to the ceiling, the support 2 being constituted by a horizontal rail extending all around the room and which is formed by portions of sections presenting a shoulder 4 on which is fastened an edge 5 of the sheet 1, in the form of a hook or harpoon, characterized in that the sheet 1 presents, at each spot where are located pipes 6 traversing it, near its sides, a reinforcing plate 7, glued on the sheet 1 with a longitudinal side of said plate 7 abutting on the edge 5 and previously cut out, like sheet 1, the cut-outs 8 of the plate 7 and those of the sheet 1 are superposed and follow the shape of each pipe 6 which traverses said sheet 1 and plate 7, and the cut-outs 8 of the plate 7 open out in the longitudinal side which abuts on the edge 5, this border being interrupted at the spots where there open out said cut-outs 8 of the plate 7 and those of the sheet 1, thus being adjacent at said spots to the shoulder 4.

2. False ceiling or false wall according to claim 1, characterized in that each cut-out 8 has the form of a U.

3. False ceiling or false wall according to claim 2, characterized in that the reinforcing plate 7 comprises two parallel cut-outs.

4. False ceiling or false wall according to claim 1, characterized in that each cut-out in the sheet 1 and the reinforcing plate 9 has the general form of a hole 10 which communicates with the edge 9a of the reinforcing plate 9 which is located on the rail 2 side, via a slit 11 with contiguous lips.

**Ansprüche**

1. Blinddecke oder Blindwand aus einem gespannten Flächengebilde (1), welches an seinen Rändern an einem an einer Mauer oder einer Decke befestigten Träger (2) angebracht ist, welcher aus einem horizontalen Rahmen besteht, der sich um das Stück erstreckt und aus Profilteilen gebildet ist, die einen Vorsprung (4) haben, an dem ein Rand (5) des Flächengebildes (1) in Form eines Hakens oder einer Harpune befestigt ist, **dadurch gekennzeichnet**, daß das Flächengebilde (1) an jeder Stelle, wo es von einer Leitung (6) durchsetzt ist, in der Nähe seines Randes eine Verstärkungsplatte (7) aufweist, die auf das Flächengebilde (1) aufgeklebt ist, wobei ein Längsrand der erwähnten Platte (7) auf dem Rand (5) aufliegt und wie das Flächengebilde (1) geeignet ausgeschnitten ist und wobei die Ausschnitte (8) der Platte (7) und die des Flächengebildes (1) übereinanderliegen und der Form der jeweiligen Leitung (6), die das Flächengebilde (1) und die Platte (7) durchsetzt, angepaßt sind und die Ausschnitte (8) der Platte (7) an der Längsseite münden, die auf dem Rand (5) aufliegt, welcher an der Stelle unterbrochen ist, wo die Ausschnitte (8) der Platte (7) und die des Flächengebildes (1) münden und auf diese Weise die erwähnten Stellen am Vorsprung (4) begrenzen.

2. Blinddecke oder Blindwand nach Anspruch 1, **dadurch gekennzeichnet,** daß die Ausschnitte (8) jeweils die Form eines U haben.

3. Blinddecke oder Blindwand nach Anspruch 2, **dadurch gekennzeichnet,** daß die Verstärkungsplatte (7) zwei parallele Ausschnitte enthält.

4. Blinddecke oder Blindwand nach Anspruch 1, **dadurch gekennzeichnet,** daß jeder Ausschnitt des Flächengebildes (1) und der Verstärkungsplatte (9) im wesentlichen die Form eines Loches (10) hat, das mit dem Rand (9a) der Verstärkungsplatte (9), der sich an der Seite des Rahmens (2) befindet, über einen Schlitz (11) mit aneinander anstoßenden Rändern in Verbindung steht.

FIG.1

FIG.2

FIG.3

FIG.4